(19) Europäisches Patentamt
European Patent Office
Office européen des brevets

(11) Publication number: **0 380 178 B1**

(12) **EUROPEAN PATENT SPECIFICATION**

(45) Date of publication of patent specification: **18.10.95**

(51) Int. Cl.⁶: **C08G 18/10**, C08G 18/80, C09J 5/06

(21) Application number: **90200157.7**

(22) Date of filing: **22.01.90**

(54) Use of crosslinkable hot melt adhesive compositions.

(30) Priority: **27.01.89 IT 1922489**

(43) Date of publication of application:
**01.08.90 Bulletin 90/31**

(45) Publication of the grant of the patent:
**18.10.95 Bulletin 95/42**

(84) Designated Contracting States:
**AT BE CH DE ES FR GB GR LI LU NL SE**

(56) References cited:
**EP-A- 0 139 895
US-A- 3 817 939
US-A- 3 842 036
US-A- 3 860 565**

(73) Proprietor: **HENKEL S.p.A.
Ferentino (Frosinone)
Località Ponte della Pietra (IT)**

(72) Inventor: **Valeretto, Francesco
Via E. Chiesa 28
I-21100 Varese (IT)**
Inventor: **Giordano, Sergio
Via Veneto 13/E
I-20068 Peschiera Borromeo (Milan) (IT)**
Inventor: **Pozzi, Enrico
Via G. Pasta 39
I-20161 Milan (IT)**

(74) Representative: **Modiano, Guido, Dr.-Ing. et al
Modiano & Associati S.r.l.
Via Meravigli, 16
I-20123 Milano (IT)**

**Description**

This invention relates to the use of a reactive hot melt composition, based on prepolymers containing isocyanate functional groups and trimerization catalysts.

Said compositions used for this purpose are intended in particular for the high-performance adhesives and sealants sector. It has high green strength values characteristic of thermoplastic compositions and because of the isocyanurate formation reaction it displays high mechanical strength and heat resistance in a very short time, even in the case of assemblies in which the adhering parts are impermeable to water vapour, such as plastics, metals, glass and ceramic.

The same composition can also be used in the coating, impregnating and laminate sectors.

Moisture curing hot melt adhesive compositions are known, as described for example in US 3,931,077 and in EP 232,055 and EP 223,562 patents.

Such systems have been applied to porous substrates.

According to the teachings of the aforesaid known art, the attainment of functional properties is accelerated by the co-use of non-reactive thermoplastic resins, which however reduce the level of irreversibility of the mechanical strength and thermal and chemical resistance characteristics obtainable, or by passage through high-humidity ovens with complicated applicational processes.

Reactive hot melt compositions of thermosetting type (suitable also for application to substrates impermeable to water vapour) are known in the adhesives and sealants sector. Cross-linking is generally obtained by hot post-curing of the assembled manufactured articles.

This involves the need of keeping the adhering parts fixed together by applying mechanical fixing means immediately after applying the hot melt (so reducing the production rate) and this limits their use to certain specific applicational cycles (particularly in the transportation industry).

Post-crosslinkable thermosetting hot melt adhesive compositions based on epoxy prepolymers have been described in the Klebstoff-Dokumentum "Strukturelles Kleben und Dichten im Fahrzeugbau, Fertigungstechnische Aufgaben und Loesungen in Gegenwart und Zukunft", Hinterwaldner Verlag, 1988, Munich, pages 109-116. These systems require application at 80°C followed by passage through an oven for 30 mins. at 180°C or thermal activation by inductive means.

Catalytically post-crosslinkable thermosetting hot melt adhesive compositions are described in the patent Fr 2,541,298 which uses a thermoplastic prepolymer of ethylenic unsaturation containing urethane groups (derived from a reaction between an epoxy resin acrylic ester containing at least one hydroxyl group, and a diol blocked with isocyanate) and a thermal radical initiator.

Such compositions can require melting temperatures of 80-120°C followed by post-crosslinking processes for 10-30 minutes at 140-160°C or electromagnetic processes.

The use of trimerization catalysts is claimed for liquid adhesives, and consequently not in hot melt compositions, as described in the patents US 3,860,565 and US 3,963,680 and in Advances in Urethane Science and Technology, vol. 8, pages 185-216, in which reference is made to microencapsulated alkaline metal carboxylates in combination with isocyanate terminated prepolymers.

Another method for rendering a trimerization catalyst latent in a liquid polyurethane prepolymer is indicated in US patent 3,896,158 which claims the latency of some dialkylaminoalkyl-urethane derivatives by the addition of certain dialkylalkanolamines to isocyanate terminating prepolymers.

The use of trimerization catalysts in liquid adhesives is also claimed in the patent JP 59,100,179 which uses aliphatic liquid prepolymers (-NCO terminated and isocyanurate and/or uretidine-dione modified), adding the catalyst (alkaline metal carboxylate or tertiary amine) at the moment of use as the second component to be mixed.

Known from US 3,842,036 are thermoset compositions comprising polyurethane-isocyanurates produced from an alkylene oxide condensate of a novolak resin, an organic polyisocyanate, and a catalyst that promotes the formation of isocyanurates from isocyanates and their use for making molded and cast articles.

The present invention provides use of cross-linkable hot melt composition, comprising:

a) prepolymers containing isocyanate functional groups having a softening point measured by the Ring and Ball ASTM E 28-method between +30 and +200 C and formed by reaction between a compound containing active hydrogens and a polyisocyanate, said compound containing active hydrogens being selected from the group consisting of polycarbonate polyols, polyester polyols, polycaprolactone polyols, polybutylene polyols, polyisoprene polyols, polybytadiene polyols, polybutadiene-acrylonitrile polyols, polystyrenebutadiene polyols and polyacrylate polyols and mixtures thereof and;

b) a trimerization catalyst;

as a hot melt adhesive.

2

The trimerization catalyst is any substance which favours the formation of isocyanurates when it reacts with prepolymers containing isocyanates functional groups.

An advantage of the composition according to the present invention is its applicational process, by which the isocyanurate formation can be activated by supplying a certain quantity of energy during the application stage.

The isocyanurate linkage gives rise to cross-linking which even proceeds at ambient temperature (without the need for processes of oven post-hardening) and in the absence of moisture, so enabling the final performance characteristics to be rapidly attained. In the adhesives and sealants field, the invention enables the hot melt composition to attain high mechanical strength and heat resistance characteristics in an extremely short time even if applied between adhering parts which are impermeable to water vapour and under conditions in which contact with moisture is prevented.

These basic properties when taken together correspond to the requirements for application to assembly lines involving a rapid or automated application rate.

The reactive system used according to the present invention is based on prepolymers with isocyanate functionalization and trimerization.

The prepolymers with isocyanate functionalization are the product of the reaction between polyisocyanates and compounds containing active hydrogen atoms and possess free or blocked isocyanate groups at the ends of the chain.

Any type of organic monomer, oligomer or polymer polyisocyanate can be used, either as such or in mixture. Representative examples of polyisocyanates are the bifunctional aromatic types based on tolylene diisocyanate (TDI), diphenylmethane diisocyanate (MDI), naphthalene diisocyanate, phenylene diisocyanate and the like; the bifunctional aliphatic and cycloaliphatic types based on hexamethylene diisocyanate (HDI), isophorone diisocyanate (IPDI), tetramethylxylylene diisocyanate, cyclohexyldiisocyanate, dicyclohexylmethane diisocyanate (H12 MDI); the bifunctional and polyfunctional types modified with urethane, carbodiimide, uretidinedione, urethone-imine, isocyanurate, urea and biuret groups and derivatives of said polyisocyanates; polymeric types such as polymethylene-polyphenylmethane polyisocyanate or the partially polymeric types such as technical diisocyanates.

The preferred types are the aromatic bifunctional types (especially MDI) and aliphatic bifunctional types (especially IPDI, HDI and H12MDI).

Compounds containing active hydrogen atoms are any type of polyol, chain extender polyol, reaction promoter or blocker, and any other compound active in the Zerewitinoff test.

Polyols suitable for use are for example polyether, polyester, polylactone, polycarbonate, polybutylene, polybutadiene and polyisoprene polyols and their mixtures.

The molecular weight can vary from 400 to 10,000 and the glass transition temperature (Tg) can vary from -80 to +50°C.

Diols of molecular weight between 400 and 5000 are generally preferred and within one and the same composition, combinations of diols of crystalline, amorphous (elastomeric) and glassy type are preferred.

Polyols with a functionality number exceeding 2 can also be used. Trifunctional polyols containing isocyanurate rings are preferred,such as trihydroxyethylisocyanurate or those derived from trimethylolpropane. As chain extenders, short chain polyols can be used such as 1,4-butanediol or 1,6-hexanediol, or aliphatic diamines such as hexamethylenediamine, isophoronediamine or polyoxyalkyleneamines. Other types of compounds active in the Zerewitinoff test which can be added are for example the polyaminoamides.

With regard to functionalization conditions, the ratio of -NCO groups to the groups containing active hydrogen must be less than or equal to 5. The -NCO content of the prepolymer is usually at least 0.5%, and preferably between 2 and 10% by weight or more. The prepolymers obtained can be further modified by introducing oxazolidonic segments by reacting the -NCO terminal groups with epoxy derivatives.

The softening point of the prepolymers or prepolymer mixtures to be considered can vary between +30 and +200°C, the preferred range being between +40 and +100°C.

Suitable blocking agents for the -NCO groups are those indicated in "Progress in organic coatings" 3 (1975) 73-99 and in US patent 4,524,104.

Other suitable substances include substituted pyrazoles as indicated in EP patent 159,117, the aromatic triazoles cited in Elastomers and Plastics vol. 11 January 1979, 6-methylpiperidin-2-one as indicated in the patent DE 3,312,028, the hydroxamic acid esters such as benzylmethacrylhydroxamate cited in J. Coating Technology, 50, 58, 1978, and polymer blockers such as the terphenphenolic resins indicated in the patent EP 294,271. Preferred blocking agents are those with a melting point exceeding 65°C.

The reaction between blocking agents and -NCO groups takes place usually with a ratio of equivalents of the blocking group to the -NCO group of between 1/1 and 2/1 and preferably between 1.05/1 and 1.1/1.

Also suitable for use are internally blocked polyisocyanates such as those containing uretidinedione groups.

The invention allows the use of any type of trimerization catalyst.

These catalysts are known particularly in the area of isocyanurate modified polyurethane foams and are described for example in the European Journal of Cellular Plastic, October 1980.

These are generally linear or cyclic tertiary amines or amidines or guanidines such as those indicated in the patents US 4,524,104, DE 3,418,429 Al and DE 3,403,499 Al and their relative salts, phosphines, alkoxides, quaternary ammonium or phosphonium or boronium salts, Mannich bases, metal carboxylates or xanthates,organometallic compounds, inorganic bases, quaternary ammonium hydroxides, quaternary N-hydroxyalkylammonium carboxylates, hydroxyalkyl tertiary amines, aziridine derivatives, silicates, titanates and cyclic sulfonium Zwitterions.

It is also known to use co-catalysts such as epoxides, alkylene carbonates and organometallic compounds, which can form adducts or complexes with the aforesaid catalysts. See for example the "Syspur Reporter" vol. 15, 1978 pages 23-26 and the "European Polymer Journal" vol. 16, 1980, pages 827-829.

It is apparent that the trimerization catalyst is chosen on the basis of the component a).

For example, in combination with free -NCO terminated prepolymers the latent types of catalysts are preferred, which may be activated at temperatures exceeding 90°C, so as to obtain industrially reliable storage stability.

The latency effect is preferably obtained by using:

a) micronized crystalline solid catalysts having a melting point exceeding 90°C;

b) salts of tertiary amines with proton donors or Lewis acids;

c) microencapsulated liquid or solid catalysts.

The preferred crystalline solid catalysts are the cyclic tertiary amines, the cycloamidines, the cycloguanidines and their salts with proton donors or Lewis acids.

If using microencapsulated liquid catalysts the preferred microencapsulation process is that of "rotational suspension-separation", whereas if using solid catalysts the following processes can be advantageously used:

- rotational suspension-separation
- spray drying or spray chilling
- coating by means of surface cross- linking of isocyanates or acrylates, operating by the typical methods of the current state of the art.

In combination with blocked -NCO terminated prepolymers, reliable storage stability is obtained using any type of trimerization catalyst.

To trigger the isocyanurate formation, the degree of incorporation of the catalyst must be greater than or equal to 0.05% by weight of the prepolymer quantity, and preferably at least 0.4%.

Any other type of additive or modifier which does not react with the trimerization catalyst can be incorporated into the hot melt composition to obtain further specific properties, for example adhesion promoters (such as functionalized trialkoxysilanes or titanates), co-catalysts (such as epoxides or organometallic compounds), viscodepressants, inorganic fillers, energy-absorbent fillers (such as conductive or ferromagnetic or polar fillers), antioxidants, stabilizers, flame retardants or non-reactive resins (such as tackifiers).

The total quantity of these optional additives can vary between 0 and 95% by weight of the hot melt composition.

The composition is prepared by mixing the aforesaid components a) and b) using production processes well known to the expert of the art.

This composition is particularly advantageous because it can be applied under conditions less critical than for known types and in particular because a cross-linking reaction takes place in a short time independently of environmental conditions, which reaction can be triggered by supplying a certain quantity of energy even just before applying the product. The energy can be supplied in the form of a shot of heat provided:

1) electrically

2) by a heat exchanger

3) electromagnetically (by induction)

4) dielectrically

5) by microwaves

or by some other method.

Said energy can be supplied over a period varying from 0.1 seconds to 10 minutes. Energy may also be supplied subsequent to application of the product, as in the current state of the art.

If microencapsulated catalysts are used, the isocyanurate formation can be activated not only thermally but also by other means able to cause release of the catalyst by rupture of the microcapsule, such as by mechanical action involving agitation, friction or pressure, even following application.

With regard to evaluating the existence and the degree of the isocyanurate linkage of the hot melt composition according to the invention, IR spectroscopy analysis and reaction enthalpy analysis conducted under anhydrous conditions by DSC are significant.

The invention is further illustrated by the following non-limiting examples.

EXAMPLES 1-2

79.1 g of polyol (CAPA 225, OH No. = 57) are placed in the reactor and deaerated under vacuum for at least 6 hours at 80°C. The temperature is lowered to 70°C and 20.1 g of 4,4'-diphenylmethanediisocyanate (Desmodur 44 MS) are added under vigorous stirring in the presence of a stream of nitrogen. The reaction is conducted at 70°C until the theoretical -NCO% value is reached (about 4 hours of reaction are required).

The temperature is reduced to 50°C and 0.4 g of catalyst in the form of 1,5,7-triazabicyclo(4.4.0)dec-5-ene, TBD, (Example 1) or 0.4 g of dibutyltindilaurate DBTL, (comparative Example 2) are then added under vigorous stirring in a stream of nitrogen.

The product is discharged after 15 minutes of vigorous stirring. At these levels of incorporation it is known that DBTL promotes mainly the moisture curing of the -NCO groups.

The determined characteristics are as follows:

| HOT MELT COMPOSITION | | Example 1 | Example 2 (comparative) |
|---|---|---|---|
| Characteristics of products as such: | | | |
| - softening point (°C) (1) | | 49.5 | 47.5 |
| - viscosity at 80°C (m.Pa.s) (2) | | | |
| initial | | 9,000 | 7,250 |
| after 6 hours | | 10,200 | 7,500 |
| - storage stability at 23°C | | | |
| NCO% | theoretical | 3.33 | 3.33 |
| | after 4 weeks | 3.00 | 3.25 |
| | after 3 months | 2.65 | 3.15 |

Method of application:

The products are heated rapidly in an anhydrous environment to 150°C. As soon as this temperature is reached and after an activation period of 5 minutes they are applied to steel specimens operating at room temperature. Lap joints are made.

| Characteristics of assembled specimens: | Example 1 | Example 2 (comparative |
|---|---|---|
| – shear strength after 60 minutes at room conditions $(daN/cm^2)$ (3) | 10.7 | 2.5 |
| – visual extent of cross-linking reaction on adhesive layer between steel specimens after 2 hours at room conditions (4) | product hardened along entire section | product hardened along edges but still waxy in interior |

Characteristics of a film of the hot

melt composition crosslinked under

anhydrous conditions: (5)

| | | |
|---|---|---|
| – IR spectroscopic analysis (6) | presence of isocyanurate bonds (band at 1715 $cm^{-1}$ specific of isocyanurate carbonyls) | absence of band at 1715 $cm^{-1}$ |

NB

(1) RING AND BALL ASTM E 28

(2) Viscotester rotary viscometer; spindle No E 1000

(3) ASTM 1002; steel UNI 5866 (1 mm thick)

   . Surface treatment = degreasing with 1,1,1-trichloroethane

   . Adhesive thickness = 30-40 microns

   . Overlapping joint area = 25x25 $mm^2$

   . No. test specimens = four per test

   . Room conditions = 23 $\pm$ 2°C, RH 60-70%

   . Assembling time of test specimens = within 30 sec from

application of adhesive.

Traction rate = 10 mm/min

(4) Steel UNI 5866 (1 mm thick)

Surface treatment = degreasing with 1,1,1-trichloroethane

Adhesive thickness = 30-40 microns

Overlapping joint area = 140x100 mm$^2$

No. test specimens = four per test

Room conditions = 23 $\pm$ 2°C, RH 60-70%

Assembling time of test specimens = within 30 sec from application

of adhesive

The examination was carried out by sectioning the assembled

test specimens.

(5) The film was formed by applying the hot melt composition at

80°C between two sheets of silicone paper, which were then

pressed together for two hours at 120°C, obtaining a thickness

of about 50 microns.

(6) The analysis was done with a Perkin Elmer FT-IR using the

multiple reflection method.

EXAMPLES 3-4-5

A mixture of 34.4 g of polyester diol (1,6-hexanediol adipate, OH No. = 54.5) and 21.0 g of polycaprolactone diol (Capa 215, OH No. = 89.7) are fed into the reactor and deaerated under vacuum at 80°C for at least 6 hours.

The temperature is lowered to 70°C and 44.2 g of 4,4'-diphenylmethanediisocyanate modified with carbodiimide (Isonate 143 M) are added under vigorous stirring in the presence of a stream of nitrogen.

The reaction is conducted at 70°C until the theoretical -NCO% value is reached (about 3 hours of reaction are required).

The temperature is reduced to 35-40°C and 0.4 g of catalyst in the form of:
- Polycat SA 610/50 [acid addition salt of 1,8-diaza-bicyclo (5.4.0) undecene-7; Example 3]
- Dabco Crystall [1,4-diaza-bicyclo (2.2.2) octane; Example 4]
- DBTL (dibutyltin dilaurate, comparative Example 5)
are then added under vigorous stirring in a stream of nitrogen. The product is discharged after 5 minutes of stirring.

The determined characteristics are as follows:

| HOT MELT COMPOSITION | | Example 3 | Example 4 | Example 5 (comparative) |
|---|---|---|---|---|
| Characteristics of products as such: | | | | |
| - softening point (°C) (*) | | 38 | 40 | 37 |
| - viscosity at 80°C (m.Pa.s) (*) | | | | |
| immediately after preparation | | 4,000 | 4,000 | 3,500 |
| - storage stability at 23°C | | | | |
| NCO% | theoretical | 10.3 | 10.3 | 10.3 |
| | after 1 day | gelled | - | - |
| | after 3 days | - | gelled | - |
| | after 15 days | - | - | 9.5 |

Method of application:

The products are heated rapidly in an anhydrous environment to 80°C. As soon as this temperature is reached they are applied to the steel specimens, operating at room temperature. The test specimens are immediately assembled and maintained for 4 minutes at 120°C.

| Characteristics of assembled specimens: | Example 3 | Example 4 | Example 5 (comparative) |
|---|---|---|---|
| - shear strength (daN/cm$^2$) (*) at 23°C: | | | |
| after 60 mins at room conditions | 1 | 5 | 1 |
| after 6 hours at room conditions | 10 | 20 | 5 |
| after 24 hours at room conditions | 40 | 45 | 9 |
| after 7 days at room conditions | 97 | 91 | 35 |
| after 21 days at room conditions | 113 | 133 | 60 |
| - shear strength (daN/cm$^2$) (*) at 80°C: | | | |
| after 7 days at room conditions | 42 | 45 | 10 |
| after 21 days at room conditions | 45 | 74 | 15 |

NB:
(*) see notes of Examples 1-2.

**Claims**

1. Use of cross-linkable hot melt composition, comprising:

   a) prepolymers containing isocyanate functional groups having a softening point measured by the Ring and Ball ASTM E 28-method between +30° and +200°C and formed by reaction between a compound containing active hydrogens and a polyisocyanate, said compound containing active hydrogens being selected from the group consisting of polycarbonate polyols, polyester polyols, polycaprolactone polyols, polybutylene polyols, polyisoprene polyols, polybytadiene polyols, polybutadiene-acrylonitrile polyols, polystyrenebutadiene polyols and polyacrylate polyols and mixtures thereof and;

   b) a trimerization catalyst;

   as a hot melt adhesive or sealant.

2. Use as claimed in claim 1, wherein the compounds containing active hydrogens are chosen from those of molecular weight between 400 and 10,000.

3. Use as claimed in claim 2, wherein the compounds containing active hydrogens are preferably choses from those of molecular weight between 500 and 5000.

4. Use as claimed in claim 1, wherein the compound containing active hydrogens is preferably chosen from a mixture of two or more of the indicated polyols.

5. Use as claimed in claim 1, wherein the compound containing active hydrogens consists of a mixture of two or more polyols in different physical forms.

6. Use as claimed in claim 1, wherein the compound containing active hydrogens is modified with polyols of molecular weight less than 400.

7. Use as claimed in claim 1, wherein the compound containing active hydrogens is modified with diamines of molecular weight less than 2000.

8. Use as claimed in claim 1, wherein the compound containing active hydrogens is modified with polyaminoamides.

9. Use as claimed in claim 1, wherein the polyisocyanate of component a) is chosen from aromatic, aliphatic or cycloaliphatic bifunctional monomers, oligomers or polymers, or from aromatic, aliphatic or cycloaliphatic oligomers modified with groups chosen from urethanes, isocyanurates, ureas, biurets, uretidinediones, urethoneimines or carbodiimides.

10. Use as claimed in the preceding claim, wherein the diisocyanate is modified with a triisocyanate.

11. Use as claimed in claim 9, wherein the polyisocyanate is chosen preferably from diphenylmethane diisocyanate, isophorone diisocyanate, hexamethylene diisocyanate and dicyclohexyl methane diisocyanate.

12. Use as claimed in claim 1, wherein the prepolymer with isocyanate functionalization of component a) is characterised by a ratio of -NCO groups to groups containing active hydrogens of less than or equal to 5.

13. Use as claimed in claim 1, wherein the prepolymer with isocyanate functionalization is characterised by -NCO content of at least 0.5% by weight.

14. Use as claimed in the preceding claim, wherein the -NCO content is preferably between 2 and 10% by weight.

15. Use as claimed in claim 1, wherein the prepolymer with isocyanate functionalization is partally modified by introducing oxazolidone segments.

16. Use as claimed in claim 1, wherein the prepolymer with isocyanate functionalization is partially modified by introducing polyols with a functionally exceeding 2.

17. Use as claimed in claim 1, wherein the prepolymer with isocyanate functionalization is characterised by the presence of blocked -NCO groups.

18. Use as claimed in the preceding claim, wherein the prepolymer with isocyanate functionalization is characterised by the presence of -NCO groups preferably blocked by blocking agents having a melting point exceeding 65°C.

19. Use as claimed in claim 17, wherein the prepolymer with isocyanate functionalization is characterised by the presence of internally blocked -NCO groups.

20. Use as claimed in claim 17, wherein the prepolymer with isocyanate functionalization is characterised by the presence of internally blocked -NCO groups such as those containing uretidinedione groups.

**21.** Use as claimed in claim 1, wherein the trimerization catalyst is selected from a group comprising trimerization catalysts which consist of one or more compounds included in the following classes of compounds:
- linear or cyclic tertiary amines or amidines or guanidines, or their salts with proton donors or Lewis acids
- phosphines
- alkoxides
- quarternary ammonium or phosphonium or boronium salts
- Mannich bases
- methal carboxylates or xanthates
- organometallic compounds
- inorganic bases
- quarternary ammonium hydroxides
- quarternary N-hydroxyalkylammonium carboxylates
- hydroxyalkyl tertiary amines
- aziridine derivatives
- silicates
- titanates
- cyclic sulfonium Zwitterions.

**22.** Use as claimed in claim 21, wherein one or more co-catalyst chosen from the following compounds:
- alkylene oxides
- epoxy derivatives
- organometallic compounds
  are added to the trimerization catalyst.

**23.** Use as claimed in claim 21, wherein the trimerization catalyst is of solid crystalline type.

**24.** Use as claimed in claim 21, wherein the trimerization catalyst is of liquid or solid type and is introduced in microencapsulated form.

**25.** Use as claimed in claim 24, wherein the trimerization catalyst is microencapsulated by rotational suspension-separation process.

**26.** Use as claimed in claim 21, wherein the quantity of trimerization catalyst is at least 0.05% by weight and preferably between 0.4% and 2% by weight.

**Patentansprüche**

**1.** Verwendung einer vernetzbaren Heißschmelz-Zusammensetzung mit:
a) Präpolymeren, die funktionelle Isocyanat-Gruppen enthalten und einen Erweichungspunkt, gemessen nach dem Ring- und Kugel-ASTM E 28-Verfahren, zwischen +30 °C und +200 °C aufweisen und durch eine Reaktion zwischen einer Verbindung, die aktive Wasserstoffe enthält, und einem Polyisocyanat gebildet wurden, wobei die genannte Verbindung, die aktive Wasserstoffe enthält, aus der Gruppe ausgewählt ist, die aus Polycarbonatpolyolen, Polyesterpolyolen, Polycaprolactonpolyolen, Polybutylenpolyolen, Polyisoprenpolyolen, Polybutadienpolyolen, Polybutadien-Acrylnitril-Polyolen, Polystyrol-Butadien-Polyolen und Polyacrylatpolyolen und Mischungen daraus besteht, und
b) einem Trimerisierungskatalysator;
als Heißschmelz-Klebstoff oder -Abdichtmittel.

**2.** Verwendung nach Anspruch 1, bei der die Verbindungen, die aktive Wasserstoffe enthalten, aus solchen mit einem Molekulargewicht zwischen 400 und 10.000 ausgewählt sind.

**3.** Verwendung nach Anspruch 2, bei der die Verbindungen, die aktive Wasserstoffe enthalten, vorzugsweise aus solchen mit einem Molekulargewicht zwischen 500 und 5.000 ausgewählt sind.

**4.** Verwendung nach Anspruch 1, bei der die Verbindung, die aktive Wasserstoffe enthält, vorzugsweise aus einer Mischung aus zwei oder mehr der angegebenen Polyole ausgewählt ist.

5. Verwendung nach Anspruch 1, bei der die Verbindung, die aktive Wasserstoffe enthält, aus einer Mischung aus zwei oder mehr Polyolen in unterschiedlichen physikalischen Formen besteht.

6. Verwendung nach Anspruch 1, bei der die Verbindung, die aktive Wasserstoffe enthält, mit Polyolen mit einem Molekulargewicht von weniger als 400 modifiziert ist.

7. Verwendung nach Anspruch 1, bei der die Verbindung, die aktive Wasserstoffe enthält, mit Diaminen mit einem Molekulargewicht von weniger als 2000 modifiziert ist.

8. Verwendung nach Anspruch 1, bei der die Verbindung, die aktive Wasserstoffe enthält, mit Polyaminoamiden modifiziert ist.

9. Verwendung nach Anspruch 1, bei der das Polyisocyanat der Komponente a) ausgewählt ist aus aromatischen, aliphatischen oder cycloaliphatischen bifunktionellen Monomeren, Oligomeren oder Polymeren, oder aus aromatischen, aliphatischen oder cycloaliphatischen Oligomeren, die mit Gruppen modifiziert sind, die ausgewählt sind aus Urethanen, Isocyanuraten, Harnstoffen, Biuret-Verbindungen, Uretidindionen, Urethoniminen oder Carbodiimiden.

10. Verwendung nach dem vorausgehenden Anspruch, bei dem das Diisocyanat mit einem Triisocyanat modifiziert ist.

11. Verwendung nach Anspruch 9, bei der das Polyisocyanat vorzugsweise ausgewählt ist aus Diphenylmethandiisocyanat, Isophorondiisocyanat, Hexamethylendiisocyanat und Dicyclohexylmethandiisocyanat.

12. Verwendung nach Anspruch 1, bei der das Präpolymere mit Isocyanat-Funktionalität der Komponente a) durch ein Verhältnis von -NCO-Gruppen zu Gruppen, die aktive Wasserstoffe enthalten, von kleiner als oder gleich 5 gekennzeichnet ist.

13. Verwendung nach Anspruch 1, bei der das Präpolymere mit Isocyanat-Funktionalität durch einen -NCO-Gehalt von wenigstens 0,5 Gew.-% gekennzeichnet ist.

14. Verwendung nach dem vorangehenden Anspruch, bei der der -NCO-Gehalt vorzugsweise zwischen 2 und 10 Gew.-% liegt.

15. Verwendung nach Anspruch 1, bei der das Präpolymere mit Isocyanat-Funktionalität teilweise durch die Einführung von Oxazolidon-Segmenten modifiziert ist.

16. Verwendung nach Anspruch 1, bei der das Präpolymere mit Isocyanat-Funktionalität teilweise durch die Einführung von Polyolen mit einer Funktionalität, die 2 überschreitet, modifiziert ist.

17. Verwendung nach Anspruch 1, bei der das Präpolymere mit Isocyanat-Funktionalität durch die Anwesenheit von blockierten -NCO-Gruppen gekennzeichnet ist.

18. Verwendung nach dem vorausgehenden Anspruch, bei der das Präpolymere mit Isocyanat-Funktionalität durch die Gegenwart von -NCO-Gruppen gekennzeichnet ist, die vorzugsweise mit Blockierungsmitteln mit einem Schmelzpunkt von mehr als 65 °C blockiert sind.

19. Verwendung nach Anspruch 17, bei der das Präpolymere mit Isocyanat-Funktionalität durch die Gegenwart von intern blockierten -NCO-Gruppen gekennzeichnet ist.

20. Verwendung nach Anspruch 17, bei der das Präpolymere mit Isocyanat-Funktionalität durch die Anwesenheit von intern blockierten -NCO-Gruppen wie beispielsweise solchen, die Uretidindion-Gruppen enthalten, gekennzeichnet ist.

21. Verwendung nach Anspruch 1, bei der der Trimerisierungskatalysator aus einer Gruppe ausgewählt ist, die Trimerisierungskatalysatoren umfaßt, die aus einer oder mehreren Verbindungen der folgenden Klassen von Verbindungen bestehen:

11

- lineare oder cyclische tertiäre Amine oder Amidine oder Guanidine oder deren Salze mit Protonendonatoren oder Lewis-Säuren,
- Phosphine,
- Alkoxide,
- quaternäre Ammonium- oder Phosphonium- oder Boronium-Salze,
- Mannich-Basen,
- Metallcarboxylate oder -xanthate,
- Organometallverbindungen,
- anorganische Basen,
- quaternäre Ammoniumhydroxide,
- quaternäre N-Hydroxyalkylammoniumcarboxylate,
- Hydroxyalkyl-tert.-amine,
- Aziridinderivate,
- Silikate,
- Titanate,
- cyclische Sulfonium-Zwitterionen.

22. Verwendung nach Anspruch 21, bei der einer oder mehrere Cokatalysatoren, ausgewählt aus den folgenden Verbindungen:
- Alkylenoxiden,
- Epoxyderivaten,
- organometallischen Verbindungen,
zu dem Trimerisierungskatalysator zugesetzt werden.

23. Verwendung nach Anspruch 21, bei der der Trimerisierungskatalysator dem festen kristallinen Typ angehört.

24. Verwendung nach Anspruch 21, bei der der Trimerisierungskatalysator dem flüssigen oder festen Typ angehört und in mikroverkapselter Form eingesetzt wird.

25. Verwendung nach Anspruch 24, bei der der Trimerisierungskatalysator nach dem Rotations-Suspensionstrenn-Verfahren mikroverkapselt ist.

26. Verwendung nach Anspruch 21, bei der die Menge des Trimerisierungskatalysators wenigstens 0,05 Gew.-% und vorzugsweise zwischen 0,4 und 2 Gew.-% beträgt.

**Revendications**

1. Utilisation d'une composition thermofusible réticulable comprenant
   a) des prépolymères contenant des groupes fonctionnels isocyanate, présentant un point de ramollissement mesuré par la méthode bille et anneau ASTM E 28 compris entre +30° et +200°C et formés par réaction entre un composé contenant des atomes d'hydrogène actifs et un polyisocyanate, ledit composé contenant des atomes d'hydrogène actifs étant choisi parmi des polycarbonate-polyols, des polyester-polyols, des polycaprolactone-polyols, des polybutylène-polyols, des polyisoprène-polyols, des polybutadiène-polyols, des polybutadiènacrylonitrile-polyols, des polystyrène-butadiène-polyols et des polyacrylate-polyols et des mélanges de ceux-ci; et
   b) un catalyseur de trimérisation;
   comme matériau d'étanchéité ou colle thermofusible.

2. Utilisation selon la revendication 1, dans laquelle les composés contenant des atomes d'hydrogène actifs sont choisis parmi ceux présentant une masse moléculaire comprise entre 400 et 10 000.

3. Utilisation selon la revendication 2, dans laquelle les composés contenant des atomes d'hydrogène actifs sont de préférence choisis parmi ceux présentant une masse moléculaire comprise entre 500 et 5000.

4. Utilisation selon la revendication 1, dans laquelle le composé contenant des atomes d'hydrogène actifs est de préférence choisi parmi un mélange de deux ou plus des polyols indiqués.

5. Utilisation selon la revendication 1, dans laquelle le composé contenant des atomes d'hydrogène actifs est constitué d'un mélange de deux ou plus polyols de formes physiques différentes.

6. Utilisation selon la revendication 1, dans laquelle le composé contenant des atomes d'hydrogène actifs est modifié avec des polyols présentant une masse moléculaire inférieure à 400.

7. Utilisation selon la revendication 1, dans laquelle le composé contenant des atomes d'hydrogène actifs est modifié avec des diamines présentant une masse moléculaire inférieure à 2000.

8. Utilisation selon la revendication 1, dans laquelle le composé contenant des atomes d'hydrogène actifs est modifié avec des polyaminoamides.

9. Utilisation selon la revendication 1, dans laquelle le polyisocyanate du composant a) est choisi parmi des monomères bifonctionnels, des oligomères ou des polymères aromatiques, aliphatiques ou cycloaliphatiques ou parmi des oligomères aromatiques, aliphatiques ou cycloaliphatiques modifiés avec des groupes choisis parmi des groupes uréthane, isocyanurate, urée, biuret, urétidinedione, uréthoneimine ou carbodiimide.

10. Utilisation selon la revendication précédente, dans laquelle le diisocyanate est modifié avec un triisocyanate.

11. Utilisation selon la revendication 9, dans laquelle le polyisocyanate est de préférence choisi parmi le diphénylméthanediisocyanate, l'isophoronediisocyanate, l'hexamétlylènediisocyanate et le dicyclohexylméthanediisocyanate.

12. Utilisation selon la revendication 1, dans laquelle le prépolymère contenant des groupes fonctionnels isocyanate du composant a) est caractérisé en ce qu'il présente un rapport des groupes -NCO aux groupes contenant des atomes d'hydrogène actifs inférieur ou égal à 5.

13. Utilisation selon la revendication 1, dans laquelle le prépolymère contenant des groupes fonctionnels isocyanate est caractérisé en ce qu'il présente une teneur en groupes -NCO d'au moins 0,5% en poids.

14. Utilisation selon la revendication précédente, dans laquelle la teneur en groupes -NCO est de préférence comprise entre 2 et 10% en poids.

15. Utilisation selon la revendication 1, dans laquelle le prépolymère contenant des groupes fonctionnels isocyanate est partiellement modifié par introduction de segments oxazolidone.

16. Utilisation selon la revendication 1, dans laquelle le prépolymère contenant des groupes fonctionnels isocyanate est partiellement modifié par introduction de polyols avec une fonctionnalité supérieure à 2.

17. Utilisation selon la revendication 1, dans laquelle le prépolymère contenant des groupes fonctionnels isocyanate est caractérisé par la présence de groupes -NCO bloqués.

18. Utilisation selon la revendication précédente, dans laquelle le prépolymère contenant des groupes fonctionnels isocyanate est caractérisé par la présence de groupes -NCO de préférence bloqués avec des agents de blocage ayant un point de fusion supérieur à 65°C.

19. Utilisation selon la revendication 17, dans laquelle le prépolymère contenant des groupes fonctionnels isocyanate est caractérisé par la présence de groupes -NCO bloqués intérieurement.

20. Utilisation selon la revendication 17, dans laquelle le prépolymère contenant des groupes fonctionnels isocyanate est caractérisé par la présence de groupes -NCO bloqués intérieurement comme ceux contenant des groupes urétidinedione.

21. Utilisation selon la revendication 1, dans laquelle le catalyseur de trimérisation est choisi parmi des catalyseurs de trimérisation qui sont constitués par un ou plusieurs composés inclus dans les groupes suivants de composés:

- des guanidines, des amidines ou des amines tertiaires linéaires ou cycliques, ou leurs sels avec des donneurs de protons ou des acides de Lewis
- des phosphines
- des alkoxy des
- des sels de boronium ou de phosphonium ou d'ammonium quaternaire
- des bases de Mannich
- des xantates ou des carboxylates de métaux
- des composés organométalliques
- des bases minérales
- des hydroxy des d'ammonium quaternaire
- des carboxylates de N-hydroxyalkylammonium quaternaire
- des hydroxyalkylamines tertiaires
- des dérivés d'aziridine
- des silicates
- des titanates
- des zwitterions sulfonium cycliques.

22. Utilisation selon la revendication 21, dans laquelle on ajoute au catalyseur de trimérisation un ou plusieurs cocatalyseurs choisis parmi les composés suivants:
    - des oxydes d'alkylène
    - des dérivés époxy
    - des composés organométalliques

23. Utilisation selon la revendication 21, dans laquelle le catalyseur de trimérisation est de type solide cristallin.

24. Utilisation selon la revendication 21, dans laquelle le catalyseur de trimérisation est de type solide ou liquide et est introduit sous forme microencapsulée.

25. Utilisation selon la revendication 24, dans laquelle le catalyseur de trimérisation est microencapsulé par un procédé de suspension-séparation par rotation.

26. Utilisation selon la revendication 21, dans laquelle le catalyseur de trimérisation représente au moins 0,05% en poids et de préférence entre 0,4 et 2% en poids.